## Europäisches Patentamt

## European Patent Office

## Office européen des brevets

(11) Numéro de publication: **0 067 732**
**B1**

(12) **FASCICULE DE BREVET EUROPEEN**

(45) Date de publication du fascicule du brevet:
**31.10.84**

(21) Numéro de dépôt: **82400859.3**

(22) Date de dépôt: **10.05.82**

(51) Int. Cl.³: **F 41 F 5/02,** F 42 C 15/34,
F 42 C 15/40, F 42 B 4/22

(54) Module embarqué lanceur d'engins avec sécurité générale réversible.

(30) Priorité: **03.06.81 FR 8110975**

(43) Date de publication de la demande:
**22.12.82 Bulletin 82/51**

(45) Mention de la délivrance du brevet:
**31.10.84 Bulletin 84/44**

(84) Etats contractants désignés:
**AT BE CH DE FR GB IT LI LU NL SE**

(56) Documents cités:
**EP - A - 0 020 225
FR - A - 2 036 520
FR - A - 2 082 375
US - A - 3 430 533**

(73) Titulaire: **ETIENNE LACROIX - TOUS ARTIFICES SA,
Route de Toulouse, F-31600 Muret (FR)**

(72) Inventeur: **Billard, Alain André Aristide, 65, avenue Saint
Germier, F-31600 Muret (FR)**
Inventeur: **Santalucia, André Robert Gino, Route de
Saint Lys, F-31490 Leguevin (FR)**
Inventeur: **Encoyand, Roland Claude, 31 rue Pierre Fons,
F-31600 Muret (FR)**

(74) Mandataire: **Corre, Jacques Denis Paul et al, Cabinet
Regimbeau 26, Avenue Kléber, F-75116 Paris (FR)**

## Description

L'invention concerne les équipements embarqués lanceurs d'engins et/ou de contre-mesures, en particulier pour aéronefs.

Dans EP-A-67 731 au nom de la demanderesse, déposée le même jour que la présente demande et intitulée »Dispositif de fixation pour modules embarqués, notamment pour modules lance-éclairants«, on a proposé une structure particulière de module lance-engin. Pour ce qui concerne la présente invention, l'aspect important de ces modules est qu'ils comprenant une paroi plane formant fond, munie d'organes de prise mâles, susceptibles de coopérer avec des organes de prise femelles homologues d'une règle-support à fixer sur l'aéronef. Un connecteur électrique permet, en position de prise, une communication entre le module embarqué et l'aéronef.

De tels modules ont vocation à contenir un nombre important de charges actives, dont les éclairants décrits dans la demande de brevet déjà citée. La difficulté est alors qu'il faut prévoir une sécurité particulièrement élaborée. De leur côté, les modules dont il est question ont vocation à apporter à l'aéronef un nombre important de types de contre-mesures ou d'engins différents, qui par contre peuvent venir se fixer indifféremment sur le même type de règle-support. Dans ces conditions, l'élaboration de la sécurité nécessaire pose de réels problèmes: il est nécessaire que cette sécurité soit intégralement portée par le module, qu'elle soit réversible, puisqu'elle doit pouvoir revenir en place lorsqu'un module non utilisé est retiré de son support sur l'aéronef, et que malgré tout elle reste parfaitement efficace.

La présente invention vient apporter une solution élégante à ce problème.

Selon un aspect de la présente invention, la paroi plane qui forme le fond du module comporte une rainure centrale, laquelle loge une série d'initiateurs électriques sélectivement reliés au connecteur électrique précité, et placés en regard de canaux de transmission de feu homologues implantés dans la paroi plane de fond, ces canaux venant aboutir respectivement vers les différentes charges utiles, telles que des éclairants, contenues dans le module. La rainure comprend en outre une barre coulissante, portant des orifices placés sur cette barre suivant la géométrie de travail des initiateurs. Enfin, il est prévu un moteur électrique, relié au connecteur, pour assurer le déplacement de la barre entre une position de sécurité et une position d'armement où les orifices sont en regard des initiateurs.

Dans un mode de réalisation préférentiel, la barre est un profilé d'aluminium en forme générale de U. On obtient ainsi une sécurité particulièrement efficace et réversible au niveau d'un module équipé de charges éclairantes.

Très avantageusement, le module comporte également deux micro-contacts, reliés au connecteur, pour détecter la position de sécurité et la position d'armement.

En pratique, il est souhaitable que les micro-contacts coopérant avec des échancrures ménagées latéralement dans la barre, et qui sont désaxées par rapport aux micro-contacts, de façon qu'un des contacts représente à coup sûr la position de sécurité et l'autre la position d'armement.

Dans un mode de réalisation particulier, il est prévu un dispositif formant clips, et capable de maintenir la barre en position de sécurité ou d'armement avec un effort de maintien important.

Selon un autre aspect de la présente invention, le moteur électrique comporte un aimant au Cobalt-Samarium, ce qui donne sous un faible encombrement un fort couple de démarrage et permet de vaincre l'effort de retenue important appliqué par le dispositif de clips précité.

Intégralement commandée et contrôlée par voie électrique, la sécurité selon la présente invention résoud de manière simple et complète le problème précité.

D'autres caractéristiques et avantages de l'invention apparaîtront à la lecture de la description détaillée qui va suivre, faire en référence aux dessins annexés, donnés pour illustrer à titre non limitatif un mode de réalisation préférentiel de l'invention, et sur lesquels:

— la figure 1 est une vue en coupe d'une règle-support utilisée pour fixer un module lanceur d'engins sur un aéronef;
— la figure 2 est une vue en coupe schématique d'un tel module lanceur d'engins;
— la figure 3 est une vue de dessus du même module, montrant les dispositifs selon la présente invention;
— la figure 4 est une vue de dessous du couvercle rapporté au module de la figure 3;
— la figure 5 est une vue en coupe du même couvercle;
— la figure 6 est une vue en coupe de la barre de sécurité incorporée au module de la figure 3; et
— la figure 7 est une vue de dessus de la même barre de sécurité.

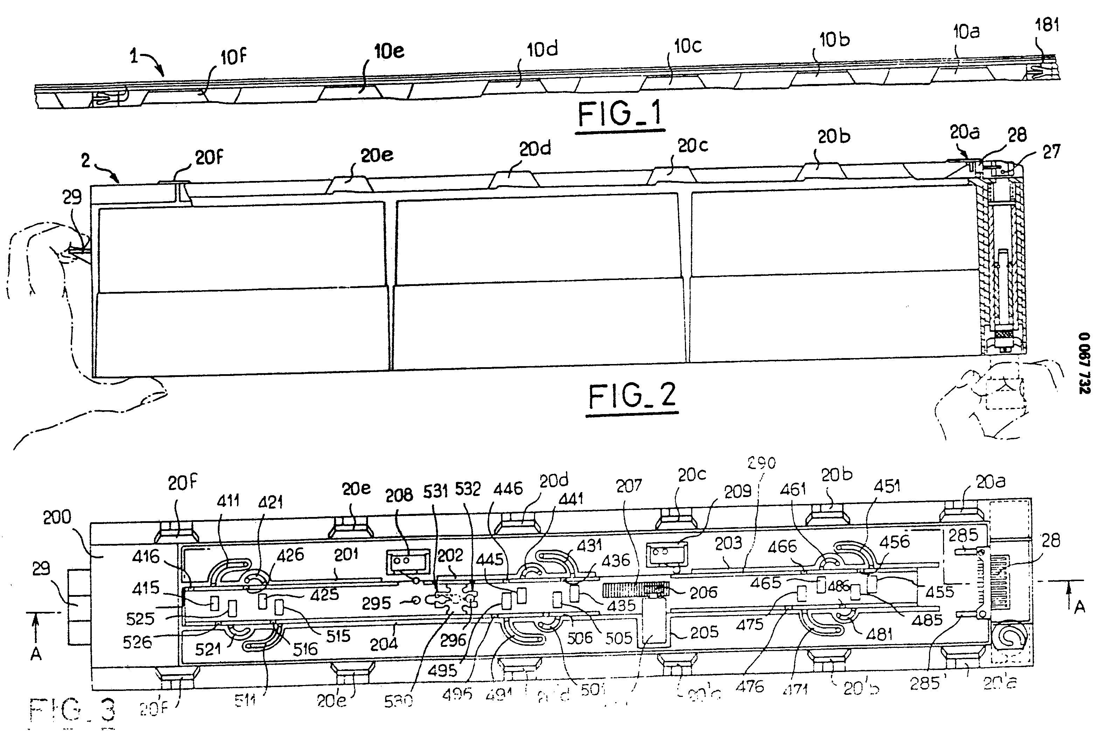

Sur la figure 1, la règle-support incorporée à l'aéronef est désignée par la référence numérique 1, et comporte des organes de prise femelles identifiés 10a à 10f. D'autres détails sur ces organes de prise apparaîtront dans EP-A-67 731 déjà citée. On remarque en 181 une arrivée de connecteur électrique.

Sur la figure 2, la référence générale 2 désigne un module lanceur d'engins. Ce module comporte des organes de prise mâles 20a à 20f, qui sont ici réalisés à la façon de queues d'arondes de même que les organes 10a à 10f homologues de la figure 1. On reconnaît également une poignée de préhension 29, ainsi qu'un dispositif 27 capable d'assurer une translation relative entre la règle-support 1 et le module 2, afin d'assurer le verrouillage des organes mâles et femelles par leurs queues d'arondes. On voit enfin un connecteur 28 incorporé au module lanceur d'engins dans sa partie supérieure, et susceptible de venir coopérer avec l'élément de connecteur 181 de la règle-support. D'autres élément descriptifs relatifs à la structure générale de ce module pourrant être trouvés dans la demande de brevet précitée.

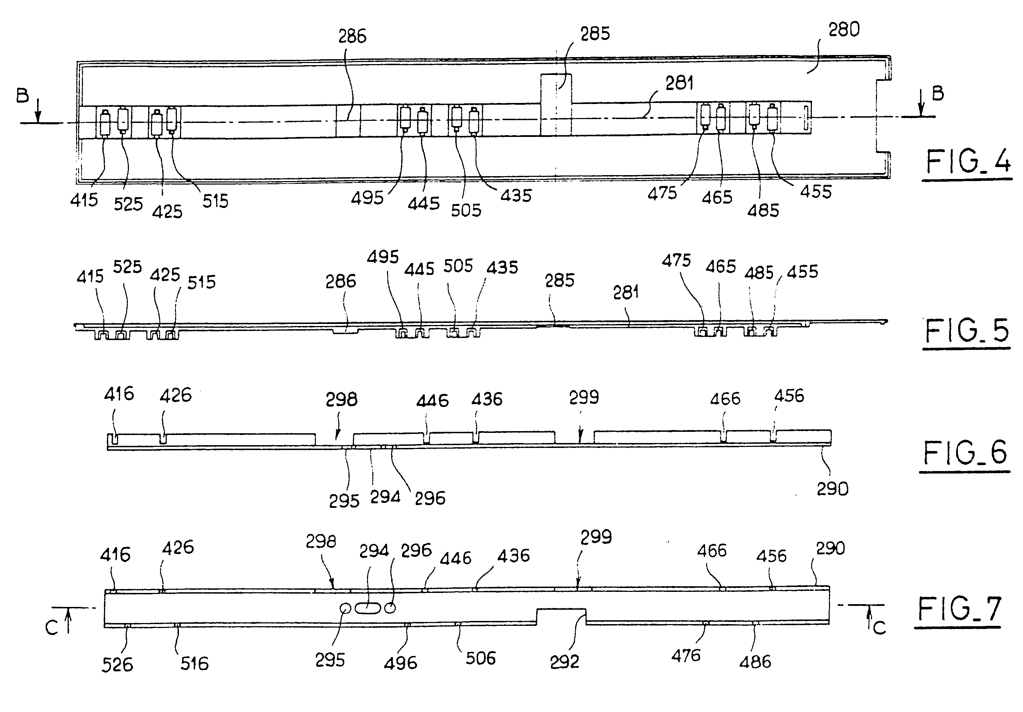

On fera maintenant référence essentiellement à la figure 3, ainsi qu'aux figures suivantes. Sur la figure 3, on vait dans la partie supérieure du module 2 une rainure centrale 201 à 204, définie d'un côté par une nervure 204, et de l'autre par trois nervures 201, 202 et 203. Sur ces nervures s'appuient des canaux de transmission de feu, à savoir 411 et 421 pour la rainure 201, 431 et 441 pour la nervure 202, 451 et 461 pour la nervure 203. De l'autre côté, la nervure 204, qui est continue sauf pour un décrochement en 205, reçoit trois paires de canaux relais, respectivement 471 et 481, 491 et 501, ainsi que 511 et 521. Ces canaux sont ouverts vers l'intérieur de la rainure, et en face d'eux se trouvent des initiateurs électriques respectifs, qui portent la même référence numérique, augmentée de quatre unités. Ainsi, un initiateur électrique 425 est placé en regard de l'entrée du canal 421, et ainsi de suite. Les initiateurs électriques 415, 425 et ainsi de suite de dix en dix, sont reliés naturellement au dispositif connecteur 28.

Dans la rainure que l'on vient de décrire est montée coulissante une barre, désignée par la référence générale 290, et illustrée sur les figures 6 et 7. Cette barre est constituée généralement d'un profilé d'aluminium à section droite en U. Latéralement, c'est-à-dire sur les branches du U, la barre porte des orifices placés suivant la géométrie de travail des initiateurs 415, 425, etc. Ces orifices portent les mêmes références que l'initiateur homologue, augmentés d'une unité. La barre 290 porte également un évidement en 292, au niveau du décrochement 205 de la rainure 204. De l'autre côté, elle porte également deux évidements 298 et 299. Enfin, le fond de la section droite de la barre comporte un perçage alvéolaire allongé 294, avec de part et d'autre et sur le même axe des perçages 295 et 296, qui portent des plots désignés par la même référence, et fixés sur la barre en saillie vers l'intérieur de celle-ci.

Comme le montre la figure 3, la paroi supérieure du module est solidaire, par une fixation qui traverse l'alvéole 294, d'un dispositif de clipsage 530, portant d'un côté une fourchette élastique 531, susceptible de venir coopérer avec le plot 295, et de l'autre une fourchette élastique 532, susceptible de coopérer avec le plot 296. De préférence, le dispositif 530 comporte aussi des extensions latérales qui viennent frotter sur les parois latérales du U constituant la barre 290, afin de bien définir la position angulaire de la pièce 530.

Sur la figure 3, on voit dans le décrochement 205 un moteur électrique 291, commandable à travers le connecteur 28, et muni d'un ou plusieurs aimants au Cobalt-Samarium, afin d'avoir un couple de démarrage important. Cet aimant coopère par une liaison mécanique à forte démultiplication, telle qu'un train d'engrenages, avec une crémaillère de la barre 290, afin de permettre un déplacement de celle-ci entre une position de sécurité (position représentée), et une position d'armement.

Enfin, également reliés au connecteur 28, sont prévus deux micro-contacts à roulette 208 et 209, qui coopérant avec les échancrures 298 et 299 déjà citées, sur la partie latérale de la barre 290. Le montage est tel que le micro-contact »sécurité« ne soit ouvert qu'en position de sécurité, tandis que le micro-contact »armement« n'est ouvert qu'en position d'armement. On obtient ainsi une connaissance certaine, au niveau de l'unité centrale de commande placée sur aéronef, quant à la position du dispositif de sécurité. Ces contacts permettent aussi de choisir la polarité de la commande du moteur 291, et de stopper la commande lorsque le verrouillage est obtenu.

Comme le montre la figure 3, dans la position de sécurité, les orifices de la barre 290 sont décalés par rapport au début des canaux 411, 421 et ainsi de suite. La mise à feu n'est donc pas possible sur initiation des initiateurs électriques. En revanche, lorsque la barre se sera déplacée vers la droite, et que le plot 295 sera venu en prise dans la fourchette 531, ce sera un micro-contact 208 qui seul sera existé, 209 venant en circuit ouvert, et les initiateurs seront alors en mesure de communiquer le feu aux canaux placés en regard, à travers les orifices qui seront venus en alignement entre chaque initiateur et son canal.

On fera maintenant référence aux figures 4 et 5, qui illustrent de manière plus précise la disposition des initiateurs. En effet, ceux-ci sont représentés sur la figure 3, mais ne devraient pas y être visibles, puisque le couvercle 280 est supposé enlevé, et que les initiateurs sont portés par le couvercle. In retrouve effectivement sur la figure 4 la dispositon géométrique des initateurs telle qu'elle est esquissée sur la figure 3. On voit également sur la figure 4 une saillie 286, qui vient porter sur le dispositif 530, afin de le maintenir en position, en particulier à l'encontre des vibrations présentes sur l'aéronef. On voit également en 285 un évidement placé au droit du décrochement 205, pour permettre un logement plus facile du moteur 291.

On notera que la sécurité selon l'invention est particulièrement intéressante, puisqu'elle s'étend de la fabrication des modules jusqu'à l'armement de ceux-ci, qui s'effectue avantageusement après décollage. Cette sécurité traite donc les phases transport, stockage, chargement sur avion.

Par ailleurs, si la charge n'est pas tirée, avant atterrissage, il est possible de revenir en position de sécurité.

En d'autres termes, l'invention permet, durant les différentes phases de la vie des munitions, de se prémunir contre le principal risque constitué par la sensibilité des dispositifs électro-pyrotechniques aux rayonnements électromagnétiques (emissions radio ou radar proches, foudre, ou impulsion électromagnétique due au flash nucléaire).

En effet, quelles que soient les précautions prises au niveau des blindages et des seuils d'insensibilité des initiateurs utilisés, le départ spontané d'un initiateur n'est jamais absolument exclu.

## Revendications

1. Module lanceur d'engins, notamment pour aéronefs, du type comprenant une paroi plane (200) formant fond, munie d'organes de prise mâles (20), susceptibles de coopérer avec des organes de prise femelles (10) homologues d'une règle-support (1) à fixer sur l'aéronef, tandis qu'un connecteur électrique (28) permet, en position de prise, une communication entre le module embarqué (2) et l'aéronef, caractérisé par le fait que: ladite paroi plane (200) formant fond comporte une rainure centrale (201 à 204), logeant une série d'initiateurs électriques (415, 425, etc.) selectivement reliés au connecteur (28), et placés en regard de canaux de transmission de feu (411, 421, etc.) homologues implantés dans la paroi plane de fond (200) pour aboutir respectivement sur des charges utiles contenues dans le module, que cette rainure comprend une barre coulissante (290), portant des orifices (416, 426, etc.) placés suivant la géométrie de travail des initiateurs, et qu'il est prévu un moteur électrique (291), relié au connecteur (28), pour assurer le déplacement de la barre entre une position de sécurité, et une position d'armement où les orifices sont en regard des initiateurs.

2. Module selon la revendication 1, caractérisé par le fait que la barre (290) est un profilé d'aluminium en forme générale de U.

3. Module selon l'une des revendications 1 et 2, caractérisé par le fait que le module (2) comporte également deux micro-contacts (208, 209), reliés au connecteur, pour détecter la position de sécurité et la position d'armement.

4. Module selon l'une des revendications 1 à 3, caractérisé par le fait qu'il est prévu un dispositif formant clips (530), et capable de maintenir la barre en position de sécurité ou d'armement avec un effort de maintien important.

5. Module selon l'une des revendications 1 à 4, caractérisé par le fait que le moteur électrique (291) comporte un aimant au Cobalt-Samarium.

6. Module selon la revendication 3, caractérisé par le fait que les micro-contacts (208, 209) coopèrent avec des evidements (298, 299) ménagées latéralement dans la barre (290), et désaxées globalement par rapport aux micro-contacts de la distance de déplacement de la barre.

## Patentansprüche

1. Flugkörper-Abschußmodul, insbesondere zur Anbringung an Luftfahrzeugen, enthaltend eine ebene Wand (200), die den Boden bildet und mit Steckorganen (20) versehen ist, welche mit entsprechenden Aufnahmeorganen (10) an einer an dem Luftfahrzeug zu befestigenden Tragleiste (1) zusammenarbeiten können, während ein elektrischer Anschluß (28) im Verbindungszustande eine Schaltung zwischen dem an Bord befindlichen Modul (2) und dem Luftfahrzeug gestattet, dadurch gekennzeichnet, daß diese den Boden bildende ebene Wand (200) eine zentrale Fuge (201 bis 204) aufweist, in welcher eine Reihe von elektrischen Initiatoren (415, 425 etc.) untergebracht ist, welche selektiv mit dem Anschluß (28) verbunden und gegenüber entsprechenden, in die Bodenwand (200) eingelassenen Feuerübertragungskanälen (411, 421 etc.) angeordnet sind, die jeweils an Ladungen münden, mit denen der Modul bestückt ist, daß diese Fuge einen Gleitstab (290) aufweist, welcher Öffnungen (416, 426 etc.) trägt, die entsprechend der Arbeitsgeometrie der Initiatoren angeordnet sind, und daß ein mit dem Anschluß (28) verbundener Elektromotor (291) vorgesehen ist, um die Verschiebung des Stabes zwischen einer Position der Sicherung und einer Position der Feuerbereitschaft zu gewährleisten, bei welcher die Öffnungen den Initiatoren gegenüberliegen.

2. Modul nach Anspruch 1, dadurch gekennzeichnet, daß der Stab (290) ein Aluminiumprofilkörper mit im wesentlichen U-förmiger Gestalt ist.

3. Modul nach Anspruch 1 oder 2, dadurch gekennzeichnet, daß der Modul (2) außerdem zwei mit dem Anschluß verbundene Mikrokontakte (208, 209) aufweist, mittels derer die Sicherungsposition und die Feuerbereitschaftsposition angezeigt werden.

4. Modul nach einem der Ansprüche 1 bis 3, dadurch gekennzeichnet, daß eine Klemmvorrichtung (530) vorgesehen ist, die geeignet ist, den Stab mit erheblicher Kraft in der Sicherungsposition oder der Feuerbereitschaftsposition zu halten.

5. Modul nach einem der Ansprüche 1 bis 4, dadurch gekennzeichnet, daß der Elektromotor (291) einen Kobalt-Samarium enthaltenden Magneten aufweist.

6. Modul nach Anspruch 3, dadurch gekennzeichnet, daß die Mikrokontakte (208, 209) mit Aussparungen (298, 299) zusammenarbeiten, die seitlich in den Stab (290) eingeschnitten und global mit Bezug auf die Mikrokontakte durch den Verschiebungsweg des Stabes versetzt angeordnet sind.

**Claims**

1. Launcher unit, particularly for aircraft, of the type comprising a flat wall (200) forming a base, provided with male engagement parts (20), capable of cooperating with complementary female engagement parts (10) upon a support (1) to be secured on the aircraft, whilst an electrical connector (28), in the engaged position, permits communication between the mounted unit (2) and the aircraft, characterised in that the said flat wall (200) forming the base comprises a central groove (201 to 204), housing a set of electrical initiators (415, 425, etc.) selectively connected to the connector (28), and facing complementary fire transmission channels (411, 421, etc.) provided in the flat base wall (200) to lead individually to firing charges contained in the unit, in that this groove contains a slidable rail (290), having apertures (416, 426, etc.) disposed according to the working geometry of the initiators, and in that there is provided an electric motor (291), connected to the connector (28), to enable displacement of the rail between a safety position and an armed position in which the apertures are aligned with the initiators.

2. A unit according to claim 1, characterised in that the rail (290) is an aluminium section of generally U-shape.

3. A unit according to one of claims 1 and 2, characterised in that the unit (2) also includes two microswitches (208, 209), connected to the connector, to detect the safety position and the armed position.

4. A unit according to one of claims 1 to 3, characterised in that there is provided means including clips (530), and capable of holding the rail in the safety position or the armed position, firmly.

5. A unit according to one of claims 1 to 4, characterised in that the electric motor (291) includes a magnet of cobalt-samarium.

6. A unit according to claim 3, characterised in that the microswitches (208, 209) co-operate with gaps (298, 299) arranged in the side of the rail (290) and offset effectively relative to the microswitches by the displacement distance of the rail.

FIG_1

FIG_2

FIG_3

0 067 732

FIG_4

FIG_5

FIG_6

FIG_7